# EUROPEAN PATENT APPLICATION

(11) **EP 4 574 585 A1**
(43) Date of publication of application: **25.06.2025**
(21) Application number: 23218866.4
(22) Date of filing: 20.12.2023
(51) Int. Cl.: B60S 1/48, B60S 1/56

(54) **METHOD FOR CONTROLLING A CLEANING ASSEMBLY OF AN EXTERIOR SENSOR MODULE**

(71) Applicant: Inalfa Roof Systems Group B.V., 5807 GW Oostrum (NL)
(72) Inventor: WIJNHOVEN, Daan Anthonius Ludovicus Martinus, 5802 CC Venray (NL)
(74) Representative: De Vries & Metman

(57) **Abstract**

The invention relates to a method for controlling a cleaning assembly of an exterior sensor module (3) for a roof (1) of a vehicle. The method including receiving (301) a contamination signal; assessing (302) whether a trigger threshold (403, 404, 405) is triggered for initiating a cleaning cycle, and on triggering of the trigger threshold, initiating (303) a cleaning cycle comprising at least one cleaning action by providing an activation signal to a cleaning assembly (11). Herein assessing (302) the trigger threshold includes at least one of assessing a position (305) of the contamination on the visor for satisfying a relevance condition, assessing size (306) of the contamination for satisfying a surface condition; and/or assessing a vehicle speed (307) for satisfying a speed condition. The invention further relates to an exterior sensor module and roof equipped with such a sensor.

## Description

The invention relates to a vehicle roof module for a sensor such as a LiDAR sensor or other light sensitive sensor. In particular, the invention relates to a method for controlling a cleaning assembly of such an exterior sensor module. Furthermore, the invention relates to an exterior sensor module.

### BACKGROUND

In support of driving assistance for vehicles and for the further aim of autonomous driving of vehicles, sensors for distance measurement of objects and image object recognition, for example of road and traffic signs, are being mounted on such vehicles. Thereto, the sensor may be placed within a sensor housing on top of the roof of a vehicle to provide a wide field of view; and raised in comparison to sensors located in e.g. a vehicle bumper. The sensor housing will have a front screen or visor to provide a light sensitive sensor, such as a LiDAR sensor, with an unobstructed field of view. As with any other vehicle screen or visor, that faces the exterior surroundings, such as head lights or a front wind shield, dirt and dust may accumulate over time on the visor. In order to ensure proper operation and maintain a clear field of view, the visor may need to be cleaned over time. In particular, as these sensors are intended to operate at a high level of reliability, the requirements therefor demand additional precautions in comparison to e.g. ultrasound-based parking sensors.

Some of these sensors may not adjust readily focus to far-field and near-field simultaneously, and for the purpose of supporting driving assistance systems these are commonly being configured for far field. Accordingly, it may be difficult for such a sensor to distinguish whether there is a nearby object that may cause driving interference or whether there is a contamination on the visor. Each of these scenarios may cause the sensor to indicate that no clear view is available and hamper driving assistance. Accordingly, there is a desire for means for cleaning of such sensors that support situational operation for driving assistance. Such system may require determining appropriate cleaning actions, such as spraying a fluid or wiping. Moreover, a cleaning action performed on the visor of the sensor itself may interfere with the Field of View or the operation of the sensor.

### SUMMARY OF INVENTION

It is an object of the invention to address the need for more advanced ways of controlling a cleaning assembly for a roof module.

The object is achieved in a method according to claim 1.

In one aspect, the invention relates to a method for controlling a cleaning assembly of an exterior sensor module for a roof of a vehicle. The method including receiving a contamination signal; assessing whether a trigger threshold is triggered for initiating a cleaning cycle, and on triggering of the trigger threshold, initiating a cleaning cycle comprising at least one cleaning action by providing an activation signal to a cleaning assembly. Herein assessing the trigger threshold includes at least one of assessing a position of the contamination on the visor for satisfying a relevance condition, assessing size of the contamination for satisfying a surface condition; and/or assessing a vehicle speed for satisfying a speed condition.

The method further including generating a release signal. Wherein the release signal may be generated upon non-triggering of the trigger threshold, upon completing the cleaning cycle, upon triggering a prediction threshold indicative of prevention of a cleaning cycle; or upon reaching a repeat limit set for cleaning cycles and/or or cleaning actions of a cleaning cycle.

In a further aspect, the invention relates to a method further including zoning of the visor, based on zoning information, by dividing the surface area of the visor into at least two zones. And further setting for each zone a respective trigger threshold.

In a further aspect, the invention relates to a method further including prioritizing cleaning actions of the cleaning cycle for the cleaning assembly.

In another aspect, the invention relates to an exterior sensor module including a sensor housing having a visor and a cleaning assembly. Wherein the cleaning includes a nozzle assembly arranged for applying and/or spraying fluid on the visor and/or a wiper assembly arranged for wiping the visor. The module further including a control unit configured for controlling the cleaning assembly, and in particular the nozzle assembly and/or the wiper assembly thereof. And wherein the control unit is configured to perform the method for controlling the cleaning assembly.

In a further aspect, the invention relates to a computer program product including instructions for carrying out the method for controlling a cleaning assembly of an exterior sensor module as described.

In yet another aspect, the invention relates to a roof or roof assembly for a vehicle, the roof or roof assembly including an exterior sensor module having a control unit configured for controlling the cleaning assembly of the roof module.

In a further aspect, the invention relates to a roof including a roof assembly having for a roof opening and roof panel arranged for opening and closing the roof opening.

The disclosed means and method allow adapting cleaning actions to situational circumstances. This may include preventing unnecessary actions, as e.g. in case of a false positive, or limit excessive repetitive actions. Which all could be intrusive for sensor operation. In this manner, means for cleaning of a sensor are provided that allow to adapt to a situation during operation. And thus support situational operation.

Further objects, aspects, effects, and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawing, wherein:
FIG. 1 illustrates a perspective view of a vehicle roof with an example of a vehicle roof module in accordance with the invention;
FIG. 2 illustrates the vehicle roof module of Fig. 1 in more detail;
FIG. 3A illustrates a method for operating a cleaning assembly in accordance with the invention;
FIG. 3B illustrates a method for operating a cleaning assembly in accordance with the invention;
FIG. 4 illustrates an example of a flow chart for operation of a cleaning assembly in accordance with the invention;
FIG. 5 illustrates another example of a flow chart for operation of a cleaning assembly in accordance with the invention;
FIG. 6 illustrates a further example of a flow chart for operation of a cleaning assembly in accordance with the invention;
FIG. 7 illustrates yet another example of a flow chart for operation of a cleaning assembly in accordance with the invention;
FIG. 8 illustrates an example a combination of the flow charts of Figs. 4, 5 and 6;
FIG. 9 illustrates an example a combination of the flow charts of Figs. 4, 5 and 7;
FIG. 10 illustrates an example a combination of the flow charts of Figs. 4, 6 and 7; and
FIG. 11 illustrates an example a combination of the flow charts of Figs. 4 - 10.

### DETAILED DESCRIPTION

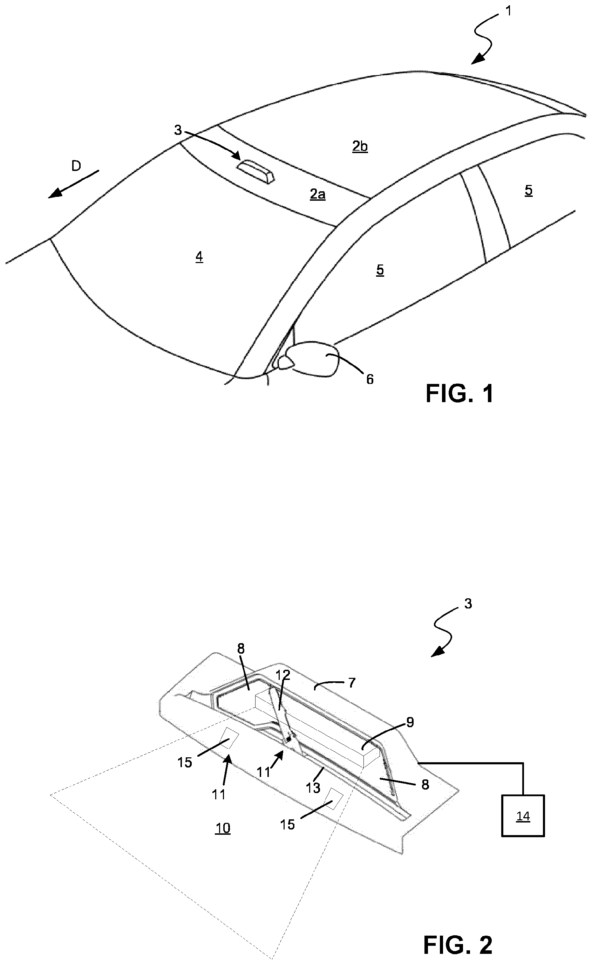

Referring to Fig. 1, a perspective view of an example of a vehicle roof 1 is schematically illustrated. In this embodiment, the roof comprises two roof panels 2a, 2b. Further shown are vehicle front window 4, side windows 5 and a side mirror 6. A general direction of forward movement is indicated by an arrow D. On top of the vehicle roof 1 a vehicle roof module 3 is shown, also referred to as an external sensor module. In this example the module 3 encloses a LiDAR sensor. Such an exterior sensor module 3 may include a wiper system and a fluid spray system. Other examples may exclude such a wiper system or spray system, or it may include additional fluid systems, as e.g. for air or washer fluid. It is noted that the illustrated vehicle roof 1 corresponds to a passenger car. The present invention is however not limited to passenger cars. Any other kind of vehicles that may be provided with an exterior sensor module are contemplated as well. For example, a vehicle having a roof assembly consisting of a roof opening and a roof panel arranged for opening and closing the roof opening.

Referring to Fig. 2, the vehicle roof module 3 of Fig. 1 is shown in more detail. The module 3 includes a sensor housing 7 having a visor or screen 8 provided at a front side of the housing with reference to a forward driving movement of a vehicle, indicated by arow D. The sensor housing 7 encloses a sensor 9 which has a field of view 10, schematically illustrated, which is in alignment with a view portion of the visor 8. The alignment ensures that objects within the field of view 10 may be detected by the sensor 9. The sensor may have a visor of itself, or it may rely solely on the visor of the housing. The roof module is further provided with a cleaning assembly 11, which includes a wiper assembly 12 movable along a wiping track 13. The cleaning assembly 11 is arranged to move the wiper along the visor 8 such that it may be wiped. The cleaning assembly 11 may further include a nozzle assembly 15 for spraying a fluid, such as air or liquid. The cleaning assembly 11 may also include other means for cleaning such as for example an ultrasound assembly for acting on the visor, or an actuator able to transmit vibrations to the visor.

A control unit 14 is schematically illustrated and is operatively coupled to the cleaning assembly of the roof module 3. The control unit 14 may be any kind of processing unit, either a software-controlled processing unit or a dedicated processing unit, like an ASIC, as well known to those skilled in the art. The control unit 14 may be a stand-alone control unit or it may be operatively connected to another control unit, like a multipurpose, generic vehicle control unit. In yet another embodiment, the control unit 14 may be embedded in or be part of such a generic vehicle control unit. Essentially, the control unit 14 may be embodied by any control unit suitable for, capable of and configured for performing operation of the cleaning assembly 11 and thus perform a cleaning action on the visor 8. One or more cleaning actions may be performed together or consecutively as part of a cleaning cycle. These may be the same cleaning actions or different cleaning actions, or a combination of cleaning actions wherein earlier actions may be repeated.

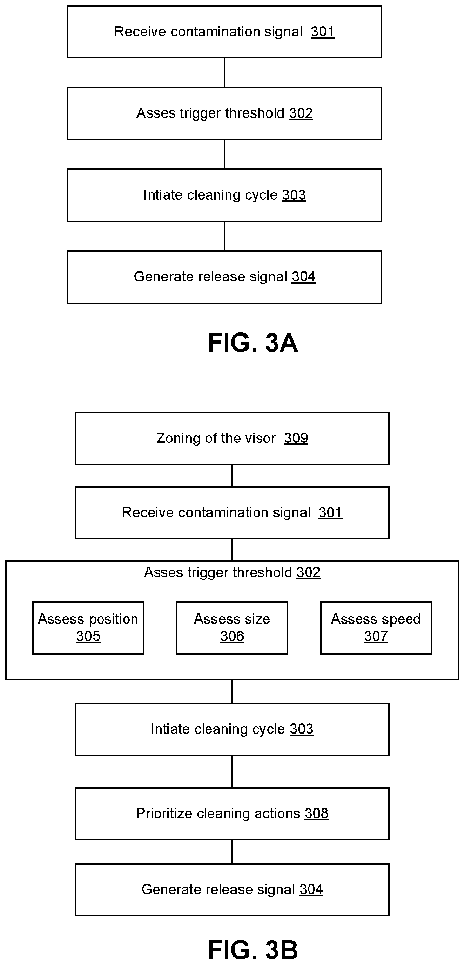

Referring to Fig. 3A, an example of a method for controlling the cleaning assembly of an exterior sensor module is shown. The method includes receiving a contamination signal 301 and assessing whether a trigger threshold is triggered for initiating a cleaning cycle 302. On triggering of the trigger threshold, that is a positive assessment that the trigger threshold is met or satisfied, initiating a cleaning cycle 303. The method further includes generating 304 a release signal, which may be upon finishing a cleaning cycle or upon no cleaning cycle in case of a negative assessment of the trigger threshold. The contamination signal may be provided by the electrical control unit ECU of a vehicle. Such an ECU may determine that potential contamination hampers operation of the sensor or it may receive an indication therefore from the sensor. The ECU may then authorise cleaning by generating the contamination signal.

The contamination signal received 301 may include blockage data or be a blockage data signal. Such blockage data may include positional data to indicate at which position or positions of the visor one or more alleged blocking objects are detected or at least suspected. The blockage data may also include a size of the one or more objects, and/or a confidence level. It may further include such parameters per segment, or indicate a measure for deterioration for the entire Field of View FoV. In other embodiments, the control unit 14 of the roof module may be configured to determine such size and/ or position from the blockage data. As mentioned, the contamination signal may be provided by the control unit of sensor, or by an image processing unit or by the vehicle control system, or any other control system able to detect an alleged contamination on the visor.

The assessment 302 of the trigger threshold, may include assessing multiple thresholds or conditions that are met. Depending on the time required for assessing the one or more thresholds or conditions, it may be that a first threshold that is satisfied leads to initiating 303 the cleaning cycle and performing of an initial cleaning action, such as e.g. blowing air through a nozzle, while further conditions are still being assessed. These further conditions may lead to the initiated cleaning cycle to include further cleaning actions, which cleaning actions may be prioritised 308 in a certain order for efficacy.

The initiating 303 of the cleaning cycle may include at least one cleaning action, such as e.g. spraying a fluid or moving a wiper, by providing an activation signal to the cleaning assembly 11. In this example, the method further includes generating a release signal 304. The generated release signal may be provided to a control unit of the sensor or more in general to the vehicle or a control unit thereof, to indicate that a cleaning cycle has been completed or that the trigger threshold was not met or that no cleaning cycle was deemed required. In other examples, which will be explained further below, a triggering of a prediction threshold, indicative of a cleaning cycle being unnecessary or superfluous, may generate a release signal. A release signal may also be generated to preserve cleaning fluid or other resources to prevent exhaustion thereof. Thereto, a repeat limit may be set on the number of cleaning actions and/or cleaning cycles performed in repetition, And reaching the limit will generate the release signal. Either way, the release signal 304 will indicate that the cleaning assembly is not performing a cleaning action that could interfere with the operation of the sensor. In other examples, instead of awaiting a release signal, the control unit of the sensor or of the vehicle in general may wait for a certain time period for determining that operation may resumed or that it may determine such upon processing of the image data signal from the sensor itself.

Referring to Fig. 3B, the method of Fig. 3A is illustrated with more detail. Herein, assessing the trigger threshold 302 may include at least one of the following: assessing a position 305 of the contamination on the visor for satisfying a relevance condition, and/or assessing a size 306 of the contamination for satisfying a surface condition, and/or assessing a vehicle speed 307 for satisfying a speed condition. The method may further include prioritizing 308 one or more cleaning actions as part of the cleaning cycle.

Assessing the position 305 of the contamination on the visor for satisfying a relevance condition may include determining whether it is located in a zone of the visor that blocks a centre of the Field of View of the sensor or whether it is more to an edge thereof. Such zoning 309 of the visor may be set in advance and / or may be set in accordance with guidelines or requirements from a manufacturer that provided the sensor. Such zoning may also take in account the effective cleaning area, such as a spray cone of nozzles or other elements for cleaning. Depending on the settings of the zoning, the position of the alleged blocking object may be considered relevant and require a cleaning cycle. The same applies with regard to other thresholds or conditions that may be considered for relevance in relation to settings for zoning. Or it may be considered irrelevant or less relevant, allowing to postpone or prioritise 308 a cleaning cycle or a cleaning action as part thereof. The position condition may include a predetermined threshold or a range of consecutive thresholds, enabling prioritisation of cleaning actions within a cleaning cycle. In particular, in the event of multiple alleged blocking objects, these may be addressed in order of relevance.

Assessing a size 306 of the contamination for satisfying a surface condition may include determining whether the size of the blocking object exceeds a predetermined surface threshold. It may also include determining whether it falls below a threshold or in between thresholds, or a combination of thereof. Thereto, the surface condition may include a minimum, a maximum, a range, and/ or any combination thereof. For example, an alleged object may be smaller than the size of droplets remaining after spraying, whether scattered or not, in which case a cleaning action with fluid could result in an increase of interference. Hence, in such case another alternative cleaning action would be preferred. Furthermore, the size threshold or surface condition could be different at a respective speed of the vehicle. As mentioned, not only the size of the object but also the aggregated surface of multiple objects in comparison to a remainder of droplets could be assessed when determining whether the surface threshold is satisfied. In addition, the cleaning action could be adapted to the aggregated surface, for example by the amount of fluid applied or by the level of pressure of a nozzle at which it operates. The surface condition could be set as a minimum surface threshold, and/or as multiple surface thresholds in relation to vehicle speed.

Assessing the size 306 may also include classifying the contamination, based on size, to determine appropriate action based on the classification as e.g. a "leave", a "bug", or a "droplet". Using machine learning, such classification process could be enhanced over time, for example by ensuring a feedback loop or other learning loop for improving the classification process based on success results of cleaning actions.

Assessing a vehicle speed 307 for satisfying a speed condition may include receiving a speed signal from the vehicle, e.g. from a control unit thereof, and determining whether the speed meets a predetermined speed threshold or aerodynamic condition related to the vehicle speed. For example, the vehicle speed may be too low for droplets resulting from spraying liquid during a cleaning action to be blown from the visor due to airflow; then spraying may be determined as undesired to prevent exacerbating blockage. On the other hand, the vehicle speed may be too high for applying air or spraying liquid, as a result of which a different cleaning action needs to be prioritised 308, such as e.g. wiping or vibrating the visor. Or instead, a pause may be observed if vehicle speed is expected to increase or decrease, for example when accelerating after the vehicle has stopped for a traffic light or decelerating when approaching a bend on a highway or taking an exit from a highway. The setting of each of these speed conditions of course depends on the aerodynamic properties of the specific vehicle whereon the roof module is mounted. Accordingly, these speed conditions may be predetermined and/or set during a set up procedure. In some examples, these may even subject to and trained by a machine learning process.

Based on the result of the assessment of the various conditions, a variety of cleaning actions may be performed as part of initiating the cleaning cycle 303. Accordingly, these various cleaning actions may be prioritized 308. Moreover, a first positive assessment of one condition may trigger the trigger threshold and consequently lead to initiating a cleaning cycle 303 and performing a first cleaning action. While other conditions may be assessed positively and lead to further cleaning actions. Some cleaning actions may even be executed immediately upon receiving 301 the contamination signal, for example if these cleaning actions can be performed without interfering operation of the visor. Hence, a cleaning cycle may already be initiated on receiving 301 the contamination signal. To achieve this, a default condition of the trigger threshold is set for activation and thus trigger the trigger threshold. For example, in case the roof module is provided with air nozzles, blowing of air can be performed immediately as an initial cleaning action as part of the initiating the cleaning cycle.

In order to further improve performance of the cleaning assembly and efficacy of the cleaning cycle, the method as disclosed may further include zoning 309 of the visor. This may facilitate to distinguish between crucial and relevant portions of the visor, and facilitate prioritising 308 cleaning actions for these areas. Accordingly, based on zoning information, the visor may be zoned by dividing the visor into at least two zones. Zoning information may be predetermined and for example be provided by a sensor manufacturer or car manufacturer and include particulars for the sensor, such as e.g. Field of View of the sensor, wavelength of the light used or other operating parameters. For example, surface areas of the visor corresponding to a centre of the field of view and an edge perimeter surrounding the centre of the field of view. In another embodiment, the zoning may divide the surface area of the visor in three parts: a left, a right and a middle zone of the visor. The method further includes providing each zone with a respective trigger threshold. The trigger threshold may set to be different, or they may be set the same under predetermined circumstances. For example, set different when on the highway, while set the same when in a crowded city neighbourhood. Accordingly, the zoning may depend on vehicle speed and/or vehicle surroundings.

In the embodiment of Fig. 3B, the zoning is performed prior to any other operation. For example, when activating the sensor. In other embodiments, the zoning may be performed in response to receiving a contamination signal. This for example would allow to adapt the zoning, in response to environmental circumstances. Or for example to a level of relevance, urgency or confidence indicated by the contamination signal.

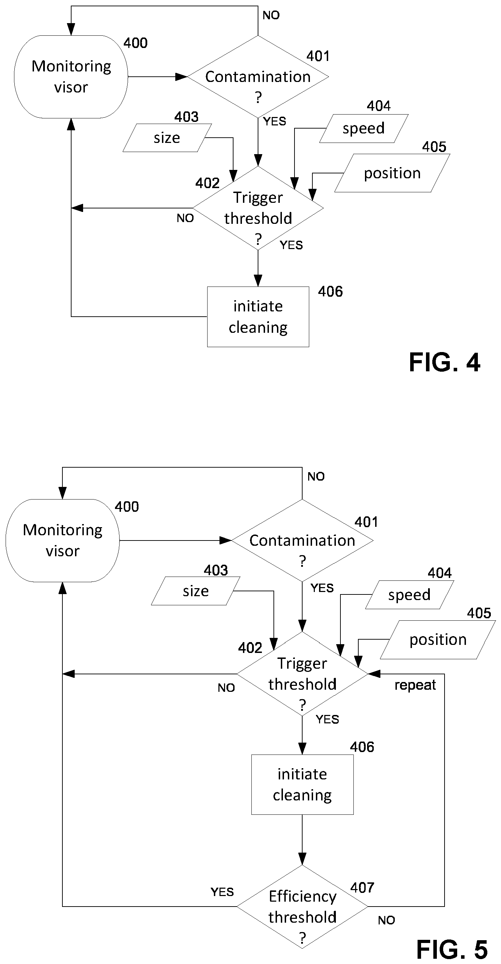

Referring to Fig. 4, an example flow chart is shown illustrating an embodiment of the method as disclosed in relation to Figs. 3A and 3B. A control unit will be monitoring 400 the visor for potential contamination. This may be the control unit of the sensor, of an image processing unit or of the vehicle. If it is determined that there is an alleged blocking object considered to be contamination 401, it will next be assessed whether a trigger threshold 402 is triggered. The assessment will take into account at least one of the size 403 of the contamination, the speed of the vehicle 404 and/or the position 405 of the contamination. If the assessment results in non-triggering of the threshold, the release signal may be generated and provided to the control unit that monitors 400 the visor. If it is assessed that the trigger threshold is triggered, the cleaning cycle will be initiated 406. Upon finishing the cleaning cycle, the control unit that monitors 400 the visor may again receive the release signal. Or it may determine that the cleaning was completed based on expiry of a predetermined time period. Or it may observe an enhancement based on processed image data and determine that cleaning was performed.

Other condition thresholds or trigger inputs may include the state of a vehicle rain sensor, a time stamp as e.g. when within a few seconds after vehicle unlock or engine start up, or temperature. With regard to temperature, for example in case of freezing conditions, even if antifreeze such as e.g. alcohol is present in the cleaning fluid, the cleaning fluid could still freeze as alcohol may evaporate during spraying. Or a wiper may freeze to the visor. In such circumstances, defrosting via e.g. heating may be initiated first. Another trigger input that may be taken in account, is the operation of the washer system of the main front window and usage of washer fluid and wiper, that could cause rainwater or washer fluid to reach the visor of the sensor.

As explained in relation to Fig. 3B, the assessing 302 of the trigger threshold 402, may include assessing the size 403, the speed 404 and position 405 for satisfying respective conditions. A first positive assessment may trigger the trigger threshold 402 and consequently lead to initiating a cleaning cycle 406 and performing a first cleaning action. Also, if the default condition is set to activation, this will trigger the trigger threshold 402. For example, in case the roof module is provided with air nozzles, the blowing of air as part of the cleaning cycle 406.

Referring to Fig. 5, an example flow chart is shown illustrating another embodiment of the method as disclosed. The flow chart of Fig. 5 differs from that of Fig, 4 in that it is expanded with an efficiency condition or threshold 407. Accordingly, the elements corresponding to that of Fig. 4 have the same references and the operation corresponds to that as explained for Fig. 4. The additional efficiency condition 407 elaborates the method by determining whether an efficiency condition is satisfied. Determination whether the efficiency condition is satisfied 407 includes comparing the assessed size and/or position or zone, of the contamination or alleged blocking object, prior to the cleaning action with the size and/or position or zone after the cleaning action against the efficiency condition or threshold. The condition may include a minimum decrease in size, optionally defined differently for a variety of positions. Or the condition may include an expected increase of surface, for example due to the amount and position of sprayed liquid in combination with vehicle speed causing a spreading thereof. Or the condition may include a minimum displacement in position, optionally defined differently for a variety in sizes. Or even an increase in spread i.e. the contamination being more evenly spread and therewith for example further diluted. Another condition may include the presence or the state of a coating, such as hydrophobic layer, on the visor. Such coatings may deteriorate over time, hence the age or state thereof may influence threshold conditions. For example, for a contamination in a position in the centre of the field of view a minimum decrease in surface may be higher than the minimum decrease for a contamination at an edge of the field of view. Accordingly, the efficiency condition or threshold may include at least one of a decrease in size, and/or a displacement from a position. Furthermore, a maximum increase may be set, e.g. due to an insect disintegrating, thereby resulting in an increase in surface but being dispersed or displaced from a relevant position away in the direction of one of the edges of the field of view.

The method may further include, based on the comparison 407, terminating the cleaning cycle if the efficiency threshold is satisfied. Or, if not satisfied, performing a further cleaning action if the efficiency threshold is unsatisfied, as illustrated in the flow chart by the 'repeat' signal. The method may further include determining whether a wiper or wiper blade is dirty, e.g. causing stripes, for example through blockage spreading or blockage accumulation at a start or an end of wiper movement. Furthermore, for example as a measure to preserve cleaning fluid or aim to prevent spoilage of fluid, the method may observe a limit in the number of steps of repetitive cleaning actions.

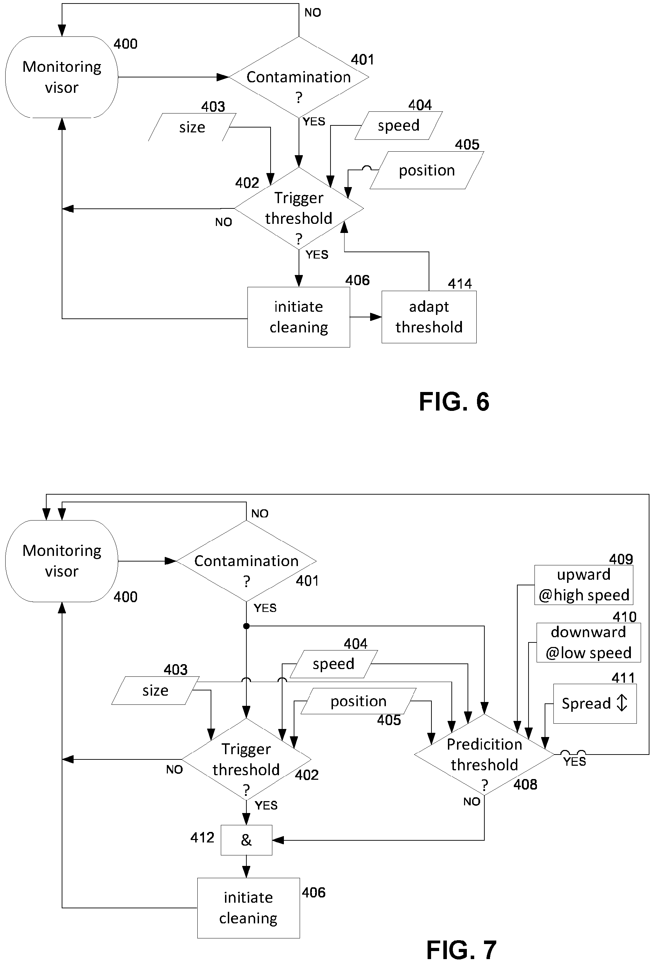

Referring to Fig. 6, an example flow chart is shown illustrating another embodiment of the method as disclosed. The flow chart of Fig. 6 differs from that of Fig, 4 in that it is expanded with an optional adaptation 414 of the trigger threshold. Accordingly, the elements corresponding to that of Fig. 4 have the same references and the operation corresponds to that as explained in relation to Fig. 4. The method as disclosed may further include adapting the trigger threshold 414. This may be done in response to the performance of a cleaning action or in response to one or more cleaning actions being part of a cleaning cycle. As a first example, herein adapting the trigger threshold includes, upon performing a cleaning action, adapting the surface condition. Which may for example be done by increasing the minimum surface threshold or by decreasing the surface threshold. In turn, this may be in dependence of, for example, the number of nozzles activated, and/or the amount of nozzle activation time, and/or the amount of fluid applied. Furthermore, this may also be in dependence of vehicle speed, and/or a position or zone and/or size of the alleged contamination.

As a cleaning cycle, or a cleaning action thereof may e.g. result in residual droplets, dispersed or spread-out contamination, or even dry wipes due to wiping, it may be desirable to prevent starting an immediate consecutive cleaning cycle following a preceding cleaning cycle. This to accommodate for some time to lapse to allow such residues to be cleared or at least partially countered by wind, airflow, rain, or other influential circumstances.

In particular, when as a result of spraying a fluid an alleged contamination or blocking object is removed, droplets remaining on the visor might trigger the trigger threshold and lead to initiating another cleaning cycle. Accordingly, to prevent such triggering, the trigger threshold may be adapted by increasing the minimum surface threshold upon the completion of a cleaning cycle.

Adapting the trigger threshold as explained above is preferably done temporarily. Thereto, the method may specify that herein adapting the trigger threshold further includes, upon expiry of a time delay following the cleaning action, reversing the increasing, respectively decreasing the minimum surface threshold. It may further include, upon assessing an increase in vehicle speed, decreasing the minimum surface threshold, and/or upon assessing a decrease in vehicle speed, increasing the minimum surface threshold.

Referring to Fig. 7, an example flow chart is shown illustrating another embodiment of the method as disclosed. The flow chart of Fig. 7 differs from that of Fig, 4 in that it is expanded with a prediction threshold 408. Accordingly, the elements corresponding to that of Fig. 4 have the same references and the operation corresponds to that as explained in relation to Fig. 4. In accordance with Fig. 7, the method as disclosed may further include determining whether a prediction condition is satisfied. As displayed in the flow chart, upon receiving a contamination signal 401, determining whether the trigger threshold is satisfied may be performed in parallel with determining whether the prediction threshold is satisfied. And the resulting determinations are to be joined i.e. combined 412 in order to initiate a cleaning cycle 406.

The prediction threshold may be satisfied 408 if the alleged contamination can be tracked or predicted to follow a track that will result in self-cleaning of the visor or that at least no active cleaning action is required. That is, at a sufficiently high vehicle speed 409, the contamination will travel in an upward direction and e.g. be blown away due to airflow, rain or other influence. Or, at a sufficiently low vehicle speed 410, the contamination will travel downwards due to gravitation, rain, aerodynamics, or other influence. Or, or in addition, the contamination may be dispersed or spread out 411 across the visor, such that it no longer will be considered a blocking object interfering with image processing and/or proper operation of the sensor. Thus, the method as disclosed may include predicting a contamination path. And/or it may include tracking of the contamination across the visor, for example by processing blockage data, which could be performed live.

The prediction threshold may be implemented as a set of predetermined settings, as a predefined process or as preprocessor i.e. continuously preprocessing input for condition thresholds. In such case, as another embodiment, the prediction threshold may deliver a signal on receiving input from the trigger threshold.

Accordingly, the prediction condition, which in some cases may be regarded as a tracking threshold, may include that at a maximum low vehicle speed, a predicted downward path satisfies the prediction threshold. And/or that at a minimum high vehicle speed, a predicted upward path satisfies the prediction threshold. And/or that a minimum scattering or spreading of contamination satisfies the prediction threshold.

Consequently, the method may further include, based on the tracking path satisfying the prediction condition, halting or a least pausing initiating the cleaning cycle. Or preventing initiating or terminating the cleaning cycle.

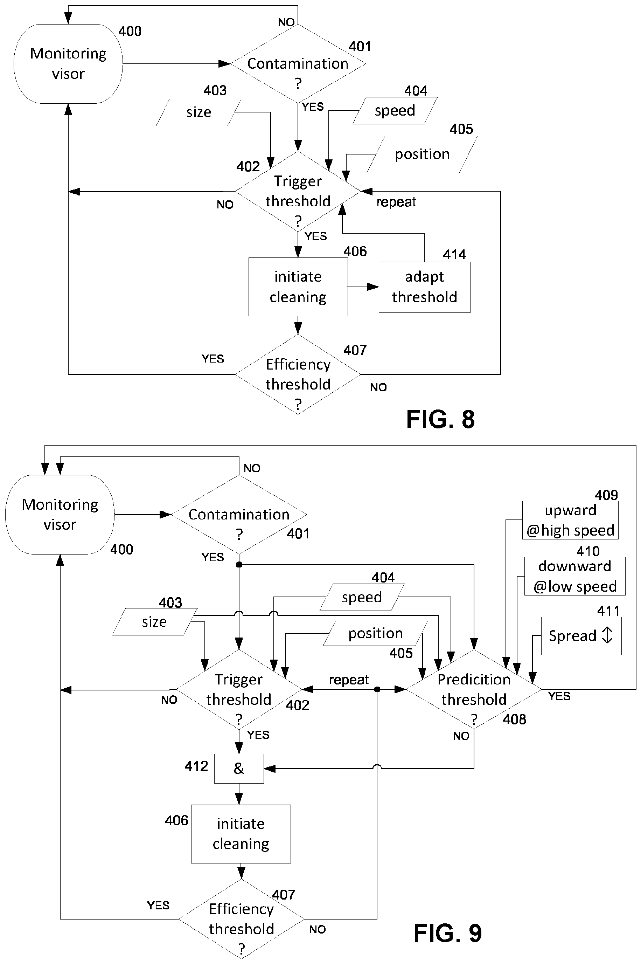

Referring to Fig. 8, an example flow chart is shown illustrating another embodiment of the method as disclosed. The flow chart combines elements disclosed in relation to Figs. 4, 5 and 6. Accordingly, the elements corresponding to that of those Figs. 4-6 have the same references and the operation corresponds to that as explained in relation to Figs. 4-6. In this embodiment, after a cleaning cycle was initiated 406, a negative assessment "no" of the efficiency threshold 407 may generate a repeat signal towards the trigger threshold 402. In turn, the trigger threshold 402 may have been adapted 414 in to the initiated cleaning cycle 406. Consequently, the repeating of the assessment of the trigger threshold 406, may lead to a different outcome than the preceding assessment and hence may lead to a different response i.e. cleaning actions when initiating a next cleaning cycle 406.

Referring to Fig. 9, an example flow chart is shown illustrating another embodiment of the method as disclosed. The flow chart combines elements disclosed in relation to Figs. 4, 5 and 7. Accordingly, the elements corresponding to that of those Figs. 4, 5 and 7 have the same references and the operation corresponds to that as explained in relation to Figs. 4, 5 and 7. In this embodiment, again, after a cleaning cycle was initiated 406, a negative assessment of the efficiency threshold 407 may generate a repeat signal, now towards both the trigger threshold 402 and the prediction threshold 408. Here, a positive assessment "yes" of the prediction threshold indicating that it is expected the visor will self-clean or at least no cleaning action is required, may lead to generation of a release signal. So, even if the efficiency threshold was initially not met, the prediction threshold allows to prevent unnecessary cleaning action.

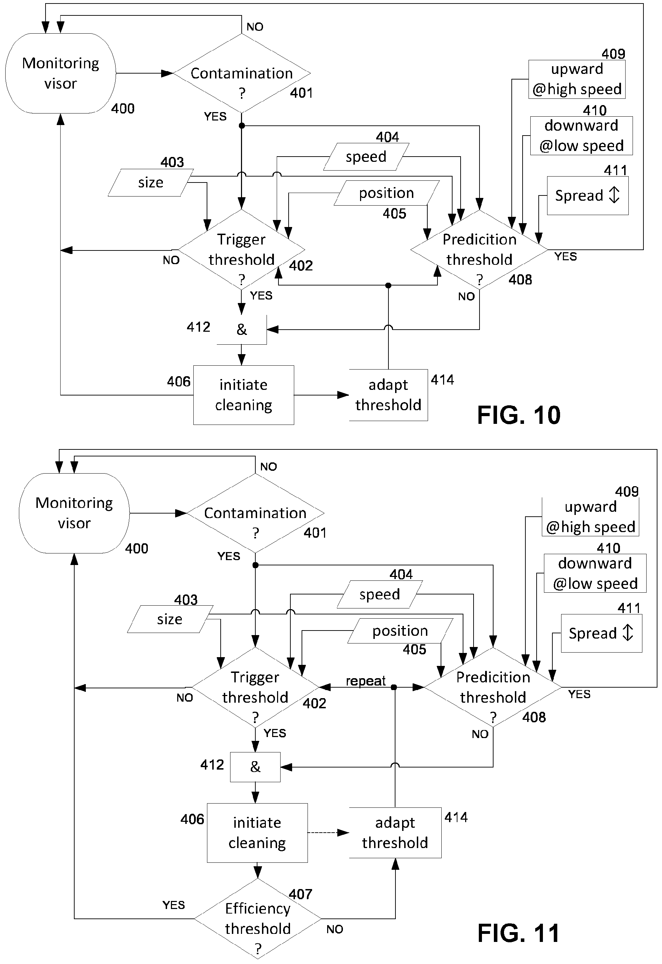

Referring to Fig. 10, an example flow chart is shown illustrating another embodiment of the method as disclosed. The flow chart combines elements disclosed in relation to Figs. 4, 6 and 7. Accordingly, the elements corresponding to that of those Figs. 4, 6 and 7 have the same references and the operation corresponds to that as explained in relation to Figs. 4, 6 and 7. In this embodiment, after a cleaning cycle was initiated 406, threshold adaptation is performed. One of the trigger threshold 402 and prediction threshold 408 or both of the trigger threshold 402 and the prediction threshold 408 may be adapted. The manner of adaptation allows to optimise response to a next contamination signal 401 being received.

Referring to Fig. 11, an example flow chart is shown illustrating another embodiment of the method as disclosed. The flow chart combines elements disclosed in relation to all of the Figs. 4 - 10. Accordingly, the elements corresponding to that of those Figs. 4-10 have the same references and the operation corresponds to that as explained in relation to Figs. 4-10. As may be understood, the combined elements allows for an elaborate configuration and operation of the cleaning assembly of the roof module. For example, in this embodiment, threshold adaptation 414 may be performed after a cleaning cycle was initiated 406. Or threshold adaptation 414 may be performed after a negative assessment "no" of the efficiency threshold 407. Or an initial threshold adaptation 414 following the cleaning cycle initiation may e.g. be reversed or mitigated upon the negative assessment of the efficiency threshold 407. Again, the threshold adaptation 414 may adapt the trigger threshold 402, the prediction threshold 408 or both.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer-controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

## Claims

1. Method for controlling a cleaning assembly of an exterior sensor module (3) for a roof (1) of a vehicle, the method comprising:
receiving (301) a contamination signal;
assessing (302) whether a trigger threshold (403, 404, 405) is triggered for initiating a cleaning cycle;
wherein assessing (302) the trigger threshold includes at least one of:
assessing a position (305) of the contamination on the visor for satisfying a relevance condition; and/or
assessing size (306) of the contamination for satisfying a surface condition; and/or
assessing a vehicle speed (307) for satisfying a speed condition; and
on triggering of the trigger threshold, initiating (303) a cleaning cycle comprising at least one cleaning action by providing an activation signal to a cleaning assembly (11).

2. Method according to claim 1, further comprising:
generating (304) a release signal, upon:
non-triggering of the trigger threshold; or
completing the cleaning cycle, or
triggering a prediction threshold indicative of prevention of a cleaning cycle; or
reaching a repeat limit set for cleaning cycles or for cleaning actions of a cleaning cycle.

3. Method according to claim 1 or 2, wherein a cleaning action comprises:
activating a nozzle assembly (15) of a cleaning assembly (11), the nozzle assembly (15) comprising at least one nozzle; and/ or
activating a wiper assembly (12) of the cleaning assembly (12), the wiper assembly (12) comprising at least one wiper.

4. Method according to any of the preceding claims, wherein assessing (302) the trigger threshold further includes:
assessing a default clean condition for satisfying activation; and
performing a corresponding default cleaning action if the default clean condition is met.

5. Method according to any of the preceding claims, further comprising: determining whether an efficiency condition (407) is satisfied, comprising:
comparing the assessed size (306) and/or position (305) or zone prior to the cleaning action with the size and/or position or zone after the cleaning action against the efficiency condition (407);
based on the comparison, terminating the cleaning cycle if the efficiency condition (407) is satisfied or performing a further cleaning action if the efficiency condition (407) is unsatisfied;
wherein the efficiency condition (407) comprises at least one of:
a decrease in size; and/or
a displacement from/out of a relevant position or zone; and/or
an increase in spread.

6. Method according to any of the preceding claims, further comprising:
adapting (414) the trigger threshold (402).

7. Method according to any of the preceding claims, further comprising:
prioritizing cleaning actions (308) of a cleaning cycle for the cleaning assembly (11).

8. Method according to claim 6, wherein adapting the trigger threshold comprises:
upon performing cleaning action, adapting the surface condition, in dependence of:
number of nozzles activated; and/or
amount of nozzle activation time; and/or
amount of fluid applied; and/or
vehicle speed; and/or
position; and/or
zone; and/or
size.

9. Method according to claim 6 or 7, wherein adapting the trigger threshold comprises:
upon expiry of a time delay following the cleaning action, decreasing the surface condition; and/or
upon assessing an increase in vehicle speed, decreasing the minimum surface threshold; and/or
upon assessing a decrease in vehicle speed, increasing the minimum surface threshold.

10. Method according to any of the preceding claims, further comprising:
determining whether a prediction condition (408) is satisfied, comprising:
predicting and/or tracking a contamination path;
wherein the prediction/ tracking threshold comprises:
at a maximum low vehicle speed, a predicted downward path (410) satisfies the prediction threshold; and/or
at a minimum high vehicle speed, a predicted upward path (409) satisfies the prediction threshold; and/or
a minimum spreading (411) satisfies the prediction threshold;
based on the tracking path satisfying the prediction condition (408), halting or initiating the cleaning cycle.

11. Method according to any of the preceding claims, further comprising
zoning (309) of the visor, based on zoning information, by dividing the visor into at least two zones;
setting for each zone a respective trigger threshold (402);
wherein the zoning depends on vehicle speed and/or vehicle surroundings.

12. Control unit for an exterior sensor module (3) for a vehicle roof (1), wherein the control unit (14) is configured to perform the method according to any of the preceding claims 1-11.

13. Exterior sensor module (3) for a vehicle roof (1), comprising:
a sensor housing (7) comprising a visor (8);
a cleaning assembly (11), comprising:
a nozzle assembly (15) arranged for applying fluid on the visor (8); and/or
a wiper assembly (12) arranged for wiping the visor (8);
a control unit (14) configured for controlling the cleaning assembly (11), and in particular the nozzle assembly (15) and the wiper assembly (12) thereof;
wherein the control unit (14) is configured to perform the method according to any of the preceding claims 1-11.

14. Computer program product, comprising instructions which, when the program is executed by a computer, cause the computer to carry out the method according to any of claims 1 -11.

15. Roof (1) for a vehicle, comprising an exterior sensor module (3) according to claim 13.
